# EUROPEAN PATENT APPLICATION

(11) **EP 1 289 317 A1**
(43) Date of publication of application: **05.03.2003**
(21) Application number: 01917718.7
(22) Date of filing: 30.03.2001
(51) Int. Cl.: H04N 13/02, H04N 5/222, G06F 17/60

(54) **METHOD FOR POSTING THREE-DIMENSIONAL IMAGE DATA AND SYSTEM FOR CREATING THREE-DIMENSIONAL IMAGE**

(30) Priority: 31.03.2000 JP 2000098481
(71) Applicant: Olympus Optical Co., Ltd., Tokyo 151-0072 (JP)
(72) Inventor: YAMAOKA, Toshihide, Akishima-shi, Tokyo 196-0032 (JP)
(74) Representative: Winter, Brandl, Fürniss, Hübner, Röss, Kaiser, Polte Partnerschaft
(86) International application number: JP0102778
(87) International publication number: WO01074090

(57) **Abstract**

A 3D image data publishing method using a computer network, including the steps of providing 3D image photographing means to an image photographing site (10), causing the image photographing site (10) to acquire image data by photographing an object using the provided 3D image photographing means and transmit the image data to a 3D image data production site (20), and causing the 3D image data production site (20) to produce 3D image data on the basis of the received image data and publish the 3D image data on the computer network (Internet 30), wherein at least the image photographing site (10) and 3D image data production site (20) are separated.

## Description

### Technical Field

The present invention relates to a 3D image data publishing method and 3D image production system.

### Background Art

As is conventionally known, 3D image data are published on homepages of the Internet or the like, and the homepages are used as 3D image database sites. 3D image data here means one or a series of image data used to display on a monitor the image of an object viewed from various directions. For example, a surrounding image such as the indoor image of a house or a landscape in a tourist resort is obtained as panoramic 3D image data and displayed as if a viewer were looking around him on that spot. Alternatively, a three-dimensional merchandize or art object is photographed from all directions to generate 3D image data, and the image of the object is rotated or moved in an arbitrary direction on a monitor such that a viewer can feel as if he were appreciating the object at hand.

For example, "image server" available from LivePicture or "Rimfire" available from PictureWork discloses a technique for storing and publishing 3D images in an Internet server. In addition, "pixabase" available from Fuji Film discloses a technique for storing and publishing in an Internet server image data that are photographed with a digital camera at an image photographing site. Jpn. pat. Appln. KOKAI Publication No. 11-15995 discloses a technique of publishing the 3D images of real estates in the Internet. Rios Corporation discloses a technique of transmitting image data that is photographed using a fisheye lens through a network and displaying the image as 3D image data.

Conventionally, however, a client who has a homepage where 3D image data is published asks a 3D image production company to produce 3D image data. The 3D image production company goes to the location of the client or the image photographing site of an object to be photographed, which is designated by the client and photographs the object. Then, the photographed data is taken back to the 3D image production site to produce 3D image data.

In this case, it takes several days to several weeks for production because of the time when the person in charge in the production company arrives at the spot or scheduling of the production company, and timely information publishing is impossible. In addition, the travel expense of the person in charge of photographing in the production company increases. Furthermore, to make the production company understand the client's intention about the production, persons in charge on both the production company and client sides must attend the location. This requires more cumbersome scheduling and many expenses.

If a client does both image photographing and conversion into 3D image data, the above problems are not posed. However, it is a department or company making a specialty of operation and sales that handles an actual object at the photographing site while conversion into 3D image data is done by a technical department or company having a specialty technique and apparatus. In practice, it is difficult for a client to have the two different specialty functions.

Even if a system is present in which a client photographs image data using a camera or the like and sends the data to a 3D image production company through the Internet, and the 3D image production company produces 3D image data and publishes the data on the homepage of the client, the 3D image production company will not provide any camera system optimum for photographing 3D image data. The client must examine, select, and introduce an appropriate camera apparatus, software, and the like by himself. Expert knowledge is necessary for selecting the camera apparatus and software to be used for 3D image photographing. It is difficult for a client to select an appropriate apparatus and software.

Furthermore, since such a technique is often improved by upgrading or the like, it is very difficult for a client to acquire or arrange an apparatus coping with the improvement or alter software without any delay.

### Disclosure of Invention

It is an object of the present invention to provide a 3D image data publishing method and 3D image production system, which can provide an optimum image photographing means for a client, quickly publish 3D image data on a computer network by causing the client to photograph an object, reduce the cost and expenses of production, and sufficiently reflect the client's intension about production.

According to a 3D image data publishing method of the present invention, there is provided a 3D image data publishing method using a computer network, comprising the steps of providing 3D image photographing means to an image photographing site causing the image photographing site to acquire image data by photographing an object using the provided 3D image photographing means and transmit the image data to a 3D image data production site, and causing the 3D image data production site to produce 3D image data on the basis of the received image data and publish the 3D image data on the computer network, wherein at least the image photographing site and 3D image data production site are separated.

According to a 3D image production system of the present invention, in a 3D image production system for producing 3D image data from a plurality of photographed image data, photographing data is added to each image data.

According to a 3D image production system of the present invention, a panoramic image photographing apparatus having a plurality of photographing modules arranged on a substantially spherical base is installed to face down to produce 3D image data viewed from an upper side.

According to a 3D image production system of the present invention, a panoramic image photographing apparatus having a plurality of photographing modules arranged on a substantially spherical base is mounted on a moving car to photograph a peripheral image.

According to a 3D image production system of the present invention, a plurality of digital cameras are arranged around an object, and the object is photographed by operating shutters of the plurality of cameras in synchronism with a change of the object or an apparatus which changes the object.

According to a 3D image production system of the present invention, in a 3D image production system which has a plurality of digital cameras arranged around an object to photograph an object image, image data containing no subject is compared with image data containing the object, and images other than the object are removed.

According to a 3D image production system of the present invention, a direction sensor is added to a camera to add photographing direction data to photographed image data.

According to a 3D image production system of the present invention, in a 3D image production system which has a plurality of digital cameras arranged around a piece of merchandise to photograph an object image, wherein merchandise management data is added to image data of the merchandise.

### Brief Description of Drawings

FIG. 1 is a view of a schematic arrangement for implementing a 3D image data publishing method according to the first embodiment of the present invention;
FIG. 2 is a view for explaining an outline when the first embodiment is applied to a panoramic image;
FIG. 3 is a view showing a model of a 360° landscape to be photographed;
FIG. 4 is a view showing a camera system 12;
FIG. 5 is a view showing photographed frames obtained by photographing the landscape shown in FIG. 3 divisionally as five frames;
FIG. 6 is a view for explaining an outline when the first embodiment is applied to an object image;
FIG. 7 is a view for explaining an object image photographing method;
FIG. 8 is a view showing images obtained by 45° step rotation, i.e., photographing a 360° image divisionally as eight images;
FIG. 9 is a view showing a detailed arrangement of the camera system 12 provided to photograph an object, in which a post B24 is fixed at an angle of 90°;
FIG. 10 is a view showing a detailed arrangement of the camera system 12 provided to photograph an object, in which the post B24 is fixed at an angle of 45°;
FIG. 11 is a view showing the schematic arrangement of the second embodiment of the present invention;
FIG. 12 is a view showing the schematic arrangement of the third embodiment of the present invention;
FIG. 13 is a view for explaining an embodiment in which an automatic panhead apparatus is applied to panoramic image photographing;
FIG. 14 is a view for explaining an embodiment in which an automatic panhead apparatus is applied to object image photographing;
FIG. 15A is a plan view for explaining another embodiment of panoramic image photographing of the third embodiment of the present invention;
FIG. 15B is a front view for explaining another embodiment of panoramic image photographing of the third embodiment of the present invention;
FIG. 16 is a perspective view showing the outer appearance of a photographing module;
FIG. 17A is a plan view for explaining still another embodiment of panoramic image photographing in the third embodiment of the present invention;
FIG. 17B is a front view for explaining still another embodiment of panoramic image photographing in the third embodiment of the present invention;
FIG. 18A is a plan view for explaining an embodiment of object image photographing in the third embodiment of the present invention;
FIG. 18B is a front view for explaining another embodiment of panoramic image photographing in the third embodiment of the present invention;
FIG. 19 is a view for explaining another embodiment of an object image apparatus in the third embodiment of the present invention;
FIG. 20 is a view for explaining an object image photographing system using a digital camera system;
FIG. 21 is a view showing a first photographing example so as to explain the outline of the fourth embodiment of the present invention;
FIG. 22 is a view showing a second photographing example so as to explain the outline of the fourth embodiment of the present invention;
FIG. 23 is a view showing a first photographing example so as to explain the outline of the fifth embodiment of the present invention; and
FIG. 24 is a view showing a second photographing example so as to explain the outline of the fifth embodiment of the present invention.

### Best Mode for Carrying Out of the Invention

An outline of the first to fifth embodiments of the present invention will be described first.
1. In the first embodiment of the present invention, in a 3D image data publishing method using a computer network, a 3D image photographing means is provided to an image photographing site, image data is acquired by photographing an object at the image photographing site using the provided 3D image photographing means and transmitted to a 3D image data production site, and 3D image data is produced at the 3D image data production site on the basis of the received image data, and published on the computer network. At least the image photographing site and 3D image data production site are separated.
   In the first embodiment, first, an optimum 3D image photographing means is provided to an image photographing site as a client located at a site where an object whose information is to be published is present. Providing includes not only freely lending an appropriate 3D image photographing means but also providing an appropriate 3D image photographing means by rental, lease, or sales for pay or recommending an appropriate 3D image photographing means to make the client obtain it by himself.
   The client photographs the object using the provided 3D image photographing means and immediately transmits the acquired image data to a 3D image data production company (to be referred to as a 3D image data production site hereinafter) by a communication method using a public line, a wireless system such as a PHS, or the Internet.
   The 3D image data production site receives the image data, produces 3D image data using hardware such as a personal computer or workstation with an advanced function and 3D image data generation software of its own, and publishes the 3D image data on a computer network such as the Internet.
   In this arrangement, since the person in charge at the 3D image data production site need not move to the site where the object whose information is to be published is present, the 3D image data of the object can quickly be published on the computer network.
   The 3D image data publishing method includes a method of publishing the image as a panoramic image and a method of publishing the image as an object image. In the method of publishing the image as a panoramic image, for example, images of landscapes or the like are stored in the server of a homepage on the Internet as panoramic image data, and an observer who accesses the homepage extracts a landscape image in a desired arbitrary direction and displays it on his monitor.
   On the other hand, in the method of publishing the image as an object image, for example, data obtained by viewing a three-dimensional subject such as an art object from various directions are stored in the server of a homepage on the Internet, and an observer who accesses the homepage extracts the image of the object viewed from a desired direction and displays it on his monitor.
2. As a characteristic feature of the second embodiment of the present invention, the 3D image photographing means in the 3D image data publishing method of the above-described first embodiment is a digital camera system.
   In the first embodiment, a so-called silver halide film camera which uses a normal film is used to photograph an object, and an image obtained by this camera is digitized, and the image data is transmitted to generate 3D image data. As a characteristic feature of the second embodiment, a client located at a site where an object whose information is to be published is present photographs the object using a digital camera system. According to this method, 3D image data can more quickly be produced and published.
3. As a characteristic feature of the third embodiment of the present invention, in the digital camera system of the second embodiment, the digital camera is set in a specific photographing condition.
   More specifically, in the third embodiment, since the digital camera is set in a specific photographing condition in photographing an object, 3D image data can easily and quickly be photographed at an image photographing site.
   Setting a specific photographing condition here means adapting the digital camera to photograph 3D image data. In photographing 3D image data, a form unique to 3D photographing is set using the digital camera system and an additional apparatus, a specific recording medium is used in 3D photographing, or the software of the digital camera is set in a photographing mode unique to 3D photographing.
4. As a characteristic feature of the fourth embodiment of the present invention, the object in the above-described first embodiment is a real estate.
   More specifically, in the fourth embodiment, a client photographs a real estate and transmits image data to a 3D image data production site. The 3D image data production site receives the image data, produces 3D image data using hardware such as a personal computer or workstation with an advanced function and 3D image data generation software of its own, and publishes the 3D image data on a computer network. Real estates include everything to be sold/purchased or rented, such as houses, multistory condominiums, buildings, factories, hotels, inns, vacant lots, and golf courses.
   Real estate agents receive sales mediation requests from customers, generate 3D image data from the indoor images or ambient images of mediated real estates, and publish them on the Internet homepages of their own.
   In a homepage, the 360° panoramic image of an indoor image or ambient image can be seen freely from any direction using 3D image data. A person who wants to purchase a real estate can check the situation without going to the spot of the real estate.
   Generally, in purchasing a real estate, it is ideal to compare a number of candidate real estates and decide a real estate to be purchased. However, it takes to time to move to actually visit the spots. Hence, a person can physically visit only several spots a day, and he must select one of a limited number of real estates or must spend a long time to visit the real estates.
   To solve this problem, 3D image data of real estates and their ambient images are published on Internet homepages such that a person who wants to purchase a real estate can compare and examine a number of real estates on the homepages as if he were actually at the spots. Even though the person will not decide purchase only on the homepages, he can easily narrow down to the real estates that meet the requirements from a number of real estates. For this reason, the time until purchase decision can be shortened.
   Conventionally, however, to produce the 3D image data of a real estate, a cameraman of a 3D image data production site goes to the spot of the mediated real estate, photographs the indoor image or ambient image of the mediated real estate, brings the image data back to the 3D image data production site, produces 3D image data, and then, publishes it on a computer network. This requires a considerable number of days from the customer's request to publication of the real estate information on the computer network, and the time is wasted until a contract for sale is actually made.
   On the other hand, when a real estate agent receives a real estate sales/purchase request from a customer, a person in charge of sales visits the spot of the mediated real estate and checks the plan, nearest transport facilities, and environment around the real estate. When the person in charge of sales divisionally photographs the 360° indoor image or ambient image of the mediate real estate using a digital camera or the like at this time and transmits the photographed image data to the 3D image data production site, and the 3D image data production site generates 3D data, the 3D image data of the real estate can be most quickly published on the Internet homepage.
   Since a real estate cannot be transported, the method of the present invention is very effective. It is also effective in forming 3D image data of precious art objects or large consumer durables such as cars or furniture, which are hard to actually transport, and publishing the 3D image data on a computer network.
5. As a characteristic feature of the fifth embodiment of the present invention, the image photographing site in the first embodiment is a merchandise shop.
   In the fifth embodiment, a client photographs an object at a merchandise shop and transmits the image data to a 3D image data production site. The 3D image data production site receives the image data, produces 3D image data using hardware such as a personal computer or workstation with an advanced function and 3D image data generation software of its own, and publishes the 3D image data on a computer network.
   In so-called electronic commerce using the Internet, private merchandise shops publish merchandise images on their homepages and sell the merchandise to customers who access the homepages. In such a sales method, customers cannot see actual objects, and it is therefore difficult to rouse wills to purchase. In addition, if merchandise that is purchased and sent to a customer has a gap from the image, the merchandise is returned.
   When 3D image data of merchandise are stored in a server and displayed on homepages such that a customer can see the image of merchandise from various directions such as the front, rear, left, and right sides and feel as if he were seeing the actual merchandise at hand, the will to purchase can be increased. In addition, the difference between the merchandise image and the actual merchandise can be reduced.
   Conventionally, however, when the 3D image data of a piece of merchandise is to be produced, a cameraman of a 3D image data production site visits a client who has the actual merchandise to photograph it, and the actual merchandise is sent from the client to the 3D image data production site to photograph the merchandise. In this case, scheduling or movement of the cameraman of the 3D image data production site, or cumbersome scheduling for merchandise sending operation is necessary, resulting in a considerable number of days and extra cost.
   In the fifth embodiment, a person in charge of sales at the client photographs merchandise at the merchandise shop where the actual merchandise is present and transmits the photographed image to the 3D image data production site, and the 3D image data production site produces 3D image data. With this arrangement, the 3D image data can be published on the homepage in a very short period at a low cost. According to this publishing method, even in that day when the client has just acquired merchandise, the 3D image data of the merchandise can be published on the homepage. Hence, the merchandise inventory period can be shortened, and the merchandise shop can be more advantageously sold than a rival shop.
   The above-described merchandise shops include not only so-called shops such as private shops, convenience stores, supermarkets, and department stores but also non-shop sales by individuals and bases of auction sales.
   The above-described embodiments will be described below in detail with reference to the accompanying drawings. The same reference numerals denote the same parts throughout the drawings.

### (First Embodiment)

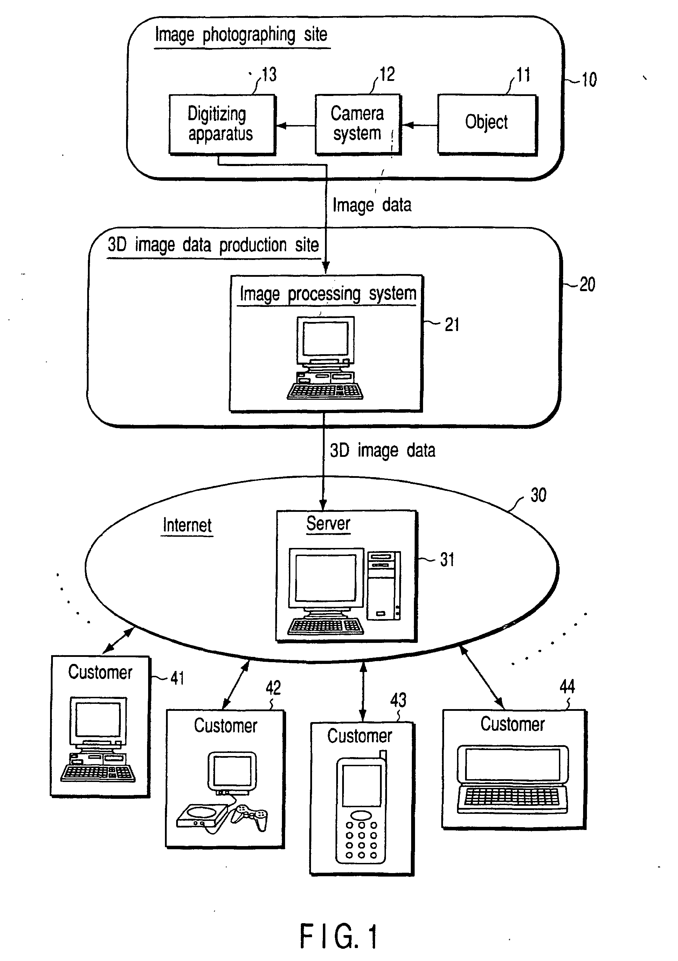

FIG. 1 is a view of a schematic arrangement for implementing a 3D image data publishing method according to the first embodiment which comprises an image photographing site 10, 3D image data production site 20, and Internet 30 as a computer network. At least the image photographing site 10 and 3D image data production site 20 are separated.

Referring to FIG. 1, a camera system 12 for panoramic photographing, which serves as a 3D image photographing means, is provided to the image photographing site 10.

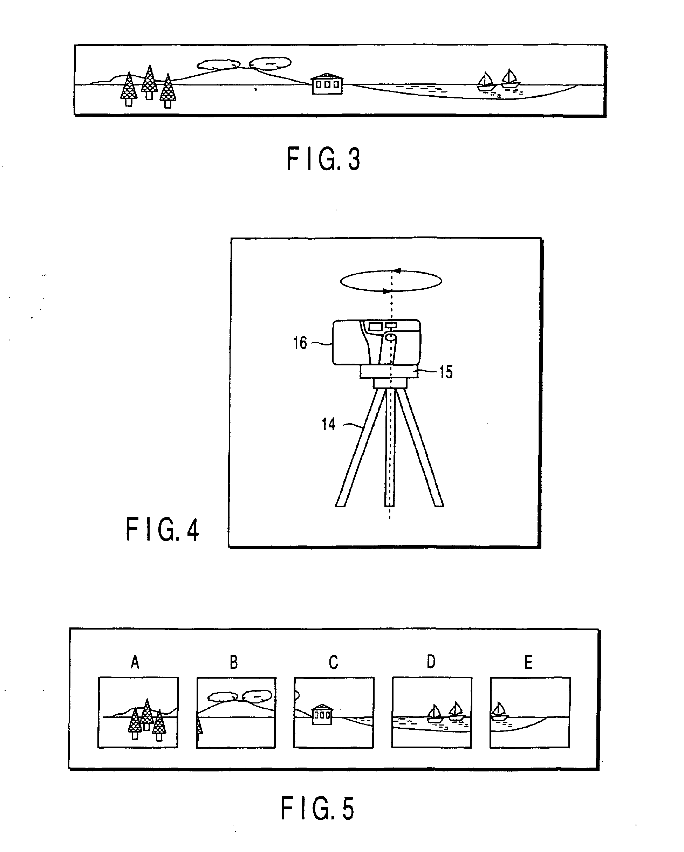

FIG. 4 shows the camera system 12. A panhead 15 is fixed on a tripod 14. A camera 16 is attached to the panhead 15. The panhead 15 is arranged such that the central axis of the tripod 14 matches the imaging position of the lens of the camera 16. The camera 16 is rotated by a predetermined angle that is set to divide the 360° view around the camera at an equal angular interval, and the landscape is photographed at each angular position.

Each frame photographed at this time is photographed such that each frame and adjacent frames photographed before and after that frame partially overlap each other at left and right end portions. For this divisional photographing, a panhead with angular divisions is used as the tripod 14. An example of the panhead is KiWi (trade name) available from Kaidan in U.S.A. If the number of divisionally photographed frames is determined, a panhead having a click mechanism capable of temporarily fixing the camera at every specific angle may be used. In addition, a panhead having a level is used to ensure the horizontal position.

An object 11 is present at the image photographing site 10. The object 11 is photographed using the camera 16. The photographed image data is converted into digital data by a digitizing apparatus 13 and transmitted to the 3D image data production site 20 by a transmitting/receiving apparatus (not shown). An image processing system 21 is installed at the 3D image data production site 20. The image data is converted into 3D image data by the 3D image data generation software of the image processing system 21.

The 3D image data is stored in a server 31 connected to the Internet 30. Customers 41, 42, 43, 44, ... have terminals capable of connecting to the Internet and displaying 3D image data. The customer 41 can access the homepage of the server 31 using a personal computer, the customer 42 can access the homepage using a game machine with a communication function, the customer 43 can access the homepage using a portable telephone, and the customer 44 can access the homepage using a portable mobile terminal to see the image of the object 11 at a desired position and angle from the 3D image data.

Referring to FIG. 1, the server 31 is installed at a location (Internet 30 in this case) separated from the image photographing site 10 and 3D image data production site 20. However, the present invention is not limited to this, and the server 31 may be installed in the 3D image data production site 20.

As the software or system for 3D image data generation used in this embodiment, so-called noncontact 3D digitization software or system such as a contour projection method, coded slit light method, light sectioning method, moiré method can be applied. The outlines and trade names of these techniques are described in detail in, e.g., a feature article "To Photograph 3D Object" of "Nikkei Computer Graphics" (p. 46, August issue, 1999), a magazine published by Nikkei BP. An example of a method of converting, into 3D image data, an image obtained by divisionally photographing a 360° image using a general camera is "QuickTimeVR" available from Apple in U.S.A. and "PhotoVista" available for LivePicture. The present invention can be applied to any 3D image data generation method described above.

The first embodiment will be described below in detail.

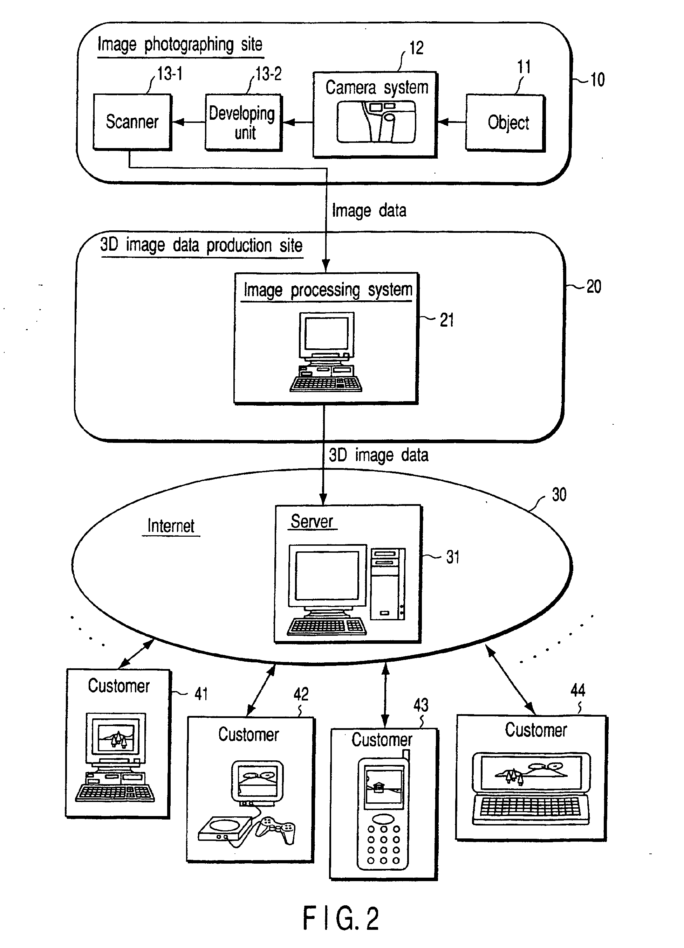

FIG. 2 is a view for explaining an outline when the first embodiment is applied to a panoramic image.

The camera system 12 for panoramic photographing is provided to the image photographing site 10 as a 3D image photographing means. At the image photographing site 10, the object 11 to be photographed by the camera system 12 is a 360° landscape when viewed from a predetermined point.

FIG. 3 is a view showing a model of a 360° landscape to be photographed. The left and right ends in FIG. 3 indicate the same point making a round of the 360° image. For photographing, the above-described 3D image photographing means shown in FIG. 4 is used.

FIG. 5 is a view showing photographed frames obtained by photographing the landscape shown in FIG. 3 divisionally as five frames. A, B, C, D, and E are photographed frames. The frames partially overlap each other at the left and right end portions. With this photographing technique, the 360° landscape can be entirely covered.

The film photographed by the camera system 12 is developed by a developing unit 13-2, converted into digital data by a scanner 13-1, and transmitted to the 3D image data production site 20 by a data transmitting apparatus. The image data received by the 3D image data production site 20 is input to the image processing system 21.

Image synthesis is executed on the basis of the plurality of images obtained by dividing the 360° view. The images are combined and converted into the 3D image data of one 360° panoramic view like the landscape shown in FIG. 3. As software for producing the 3D image data of such a panoramic image, "QuickTimeVR" of Apple in U.S.A. or "Image Server" of LivePicture in U.S.A. is commercially available. In such software, optical information such as the focal length of the lens of the camera that has photographed the image is stored. The peripheral distortion and the like of each photographed image are corrected on the basis of the optical information. In this way, the divisionally photographed images are converted into one 3D image data.

This 3D image data is stored in the server 31 connected to the Internet. The 3D image data stored in the server 31 can be three-dimensionally displayed using observation software called Viewer software such that an arbitrary portion of the panoramic image is extracted to the window of the monitor such as a personal computer or zoomed to make the user feel as if he were looking around him at the spot or seeing the landscape at close range.

Such viewer software can easily be obtained by downloading it from the Internet homepage of a software maker or the like. Such viewer software is introduced to an information device such as a personal computer capable of displaying 3D image data from the Internet. Referring to FIG. 2, the information devices of the customers 41, 42, 43, 44, ... have such viewer software. When a window from an arbitrary direction is instructed by an instruction from an input device such as the keyboard or mouse of the information device, a window corresponding to the customer's request is displayed on the monitor screen of each information device.

Referring to FIG. 2, the customer 41 uses a personal computer, the customer 42 uses a game machine with a communication function, the customer 43 uses a portable telephone, and the customer 44 uses a portable information terminal called a PDA (Personal Digital Assistant). As the personal computer, a personal computer such as a Window98 machine available from various makers or Macintosh machine available from Apple Computer can be used. As the game machine with a communication function, PlayStation2 available from Sony Corp. or Dreamcast available from SEGA ENTERPRISES, LTD. can be used. As the portable telephone, a telephone of the i mode series available from NTT Mobile Communications Network Inc. can be used. As the PDA, merchandise such as Power Zaurus available from Sharp Corp. or merchandise shop and a communication adapter or the like are being sold as compatible merchandise.

However, for these pieces of merchandise, the hardware specifications such as the CPU, the number of pixels of the display unit, or the number of colors, and the OS, control software, and display software are different. Hence, even when the same 3D image data is transmitted, it cannot be appropriately displayed. Hence, the type or use software of a terminal device that has accessed the server 31 or transmitting apparatus must be discriminated to transmit the data in an appropriate data format. Alternatively, so-called viewer software capable of decoding 3D image data contained in transmission data and displaying a 3D image must be plugged in in each terminal device in advance. Alternatively, a means for transmitting software which automatically displays a 3D image at each terminal device in, e.g., a JAVA applet together with transmission data is required.

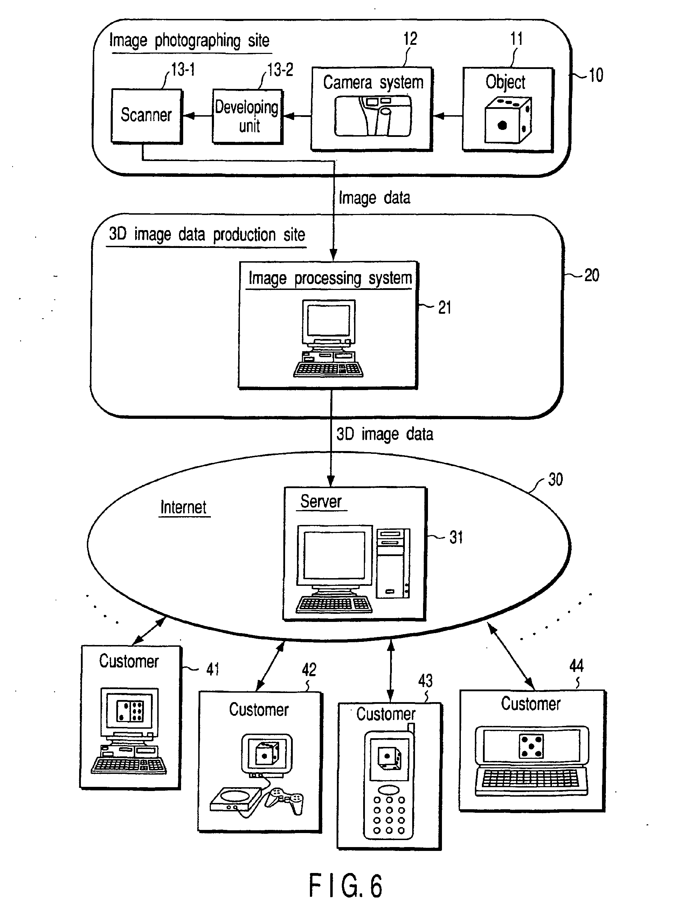

FIG. 6 is a view for explaining an outline when the first embodiment is applied to an object image.

The camera system 12 for object photographing is provided to the image photographing site 10 as a 3D image photographing means. The object 11 to be photographed by the camera system 12 is a 3D object. In this embodiment, a description will be made assuming a dice.

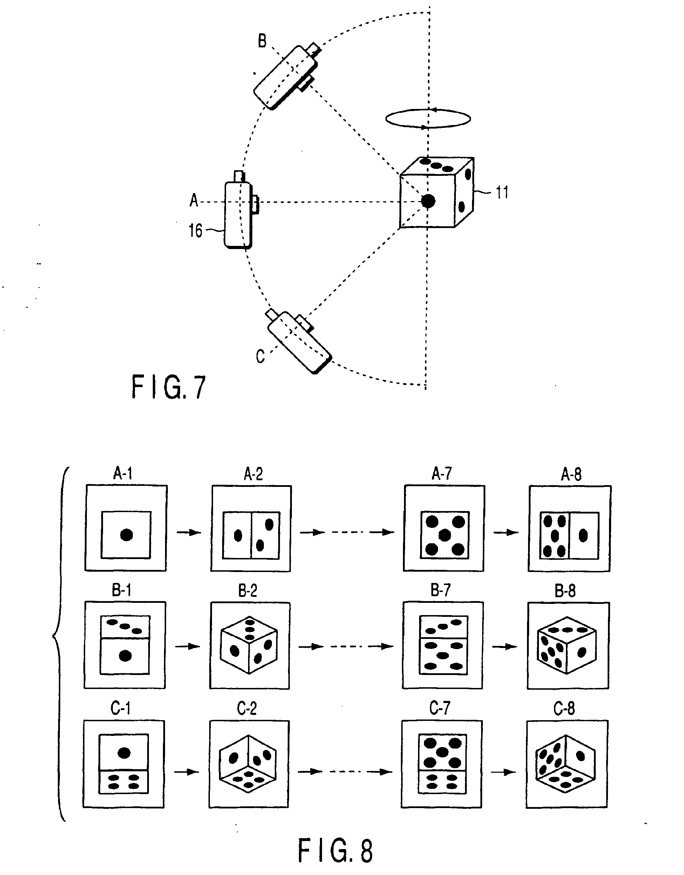

FIG. 7 is a view for explaining an object image photographing method. Referring to FIG. 7, the camera 16 is viewed from a side and arranged at circumferential positions (horizontal: A), (upper side: B), and (lower side: C) equidistant from the central portion of the object. The object 11 rotates stepwise at a predetermined angle about its central axis. The object 11 stops for every step rotation and is photographed by the camera 16. That is, the 360° outer image of the object 11 is divisionally photographed.

FIG. 8 is a view showing images obtained by 45° step rotation, i.e., photographing a 360° image divisionally as eight images. Referring to FIG. 8, A-1, A-2, ..., A-7, and A-8 are images photographed at the position A by the camera 16. B-1, B-2, ..., B-7, and B-8 are images photographed at the position B by the camera 16. C-1, C-2, ..., C-7, and C-8 are images photographed at the position C by the camera 16.

The film on which the series of images are recorded is developed by the developing unit 13-2, converted into digital data by the scanner 13-1, and transmitted to the 3D image data production site 20 by the data transmitting apparatus. The image data received by the 3D image data production site 20 is input to the image processing system 21. The image processing system 21 synthesizes the series of image data into one 3D image data. Examples of software for converting image data into 3D image data are "QuickTimeVR AuthoringStudio" available from Apple in U.S.A. and "Image Server" available for LivePicture in U.S.A. are commercially available.

The 3D image data is stored in the server 31 connected to the Internet. The 3D image data stored in the server 31 can be seen by communication between the Internet and a display apparatus in which observation software called viewer software is installed.

Referring to FIG. 6, a customer can three-dimensionally display an image as if he were handling the object at hand by displaying the dice image viewed from a desired direction using a personal computer at the customer 41, a game machine with a communication function at the customer 42, a portable telephone at the customer 43, and a portable information terminal called a PDA (Personal Digital Assistant).

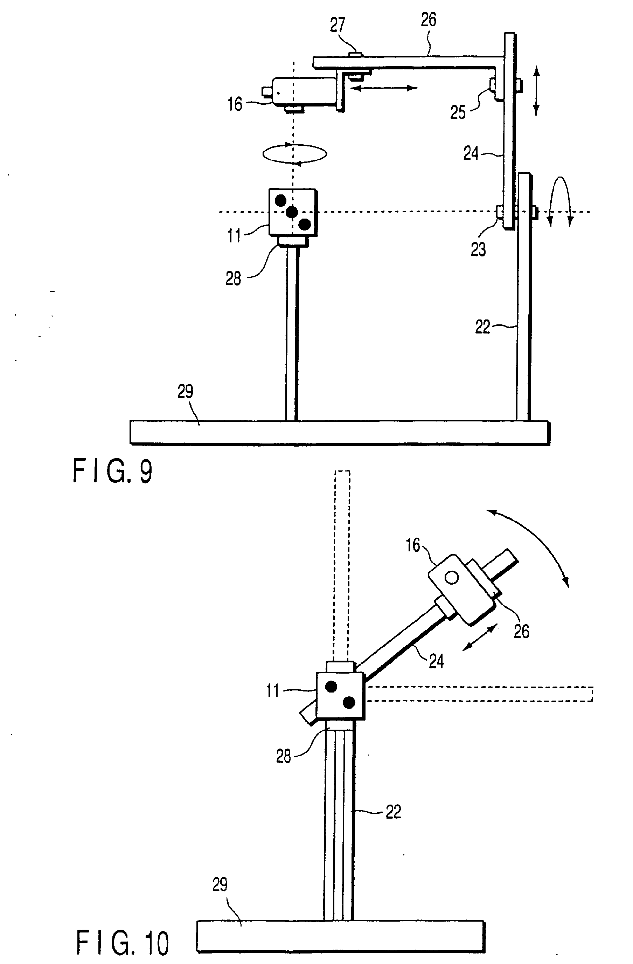

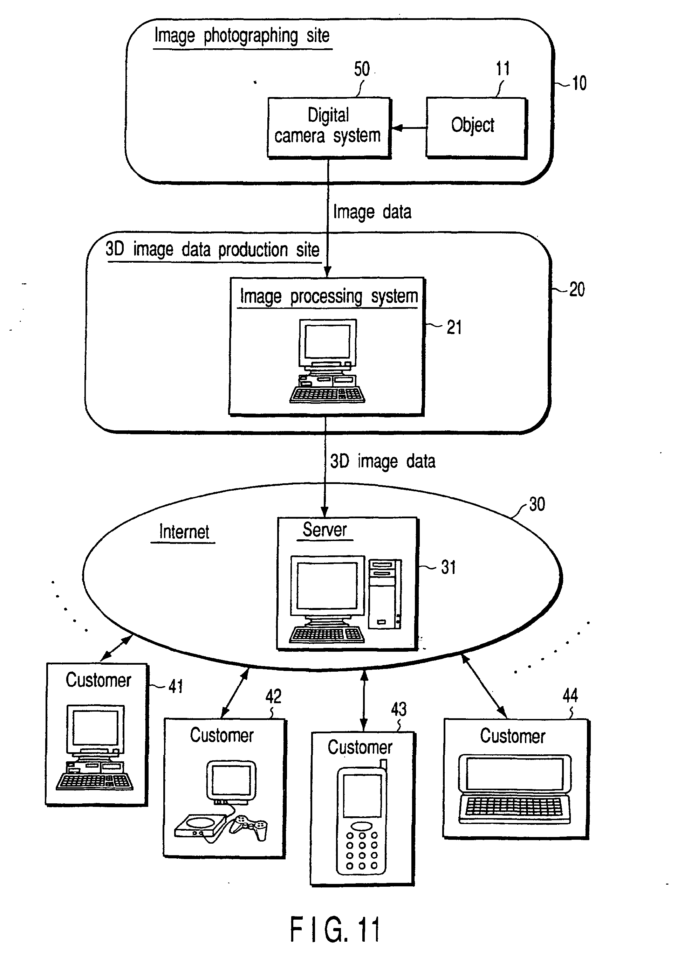

FIGS. 9 and 10 are views showing a detailed arrangement of the camera system 12 provided to photograph an object. FIG. 9 is a front view. FIG. 10 is a side view.

A rack 28 for carrying the object 11 and a post A 22 for holding the camera 16 and the like extend on a base 29. A post B 24 capable of pivoting about a pin A 23 is attached to the post A 22. The post B 24 is set at a predetermined angle and then fixed by the pin A 23.

A post C 26 is attached to the post B 24 to be able to slide in a direction indicated by an arrow. The post B 24 is set at a predetermined position and then fixed by a pin B 25. The camera 16 is attached to the post C 26 to be able to slide in a direction indicated by an arrow along the post C 26. The camera 16 is set at a predetermined position and then fixed by a pin C 27. The post A 22, post B 24, and post C 26 are arranged such that the optical axis of the lens of the camera 16 is directed to the center of the object 11. Normally, the object 11 is photographed while a predetermined size is assured for the object 11 in images. For this reason, the pin B 25 and pin C 27 are set at the start of photographing and then fixed. After the post B 24 is rotated to a predetermined angle, and the angle is fixed by the pin A 23, the rack 28 makes a round about its central axis by step rotation at a predetermined angle. The rack 28 stops for every step rotation and is photographed by the camera 16. That is, the 360° outer image of the object 11 at a predetermined angle is divisionally photographed. Next, after the post B 24 is pivoted to another predetermined angle, and the angle is fixed by the pin A 23, the rack 28 makes a round about its central axis by step rotation at a predetermined angle. A 360° outer image of the object 11 is repeatedly photographed by the camera 16 for every step rotation. In this way, a 360° outer image of the object 11 is photographed at every predetermined angle.

Referring to FIG. 10, the position when the object is photographed at 45° from the upper side of the post B 24 is indicated by a solid line, and the position when the object is photographed from the horizontal direction and at 90° from the upper side is indicated by a broken line. When the set angles of the post B 24 are finely set and the peripheral image of the object viewed from various angles are photographed, the 3D image can smoothly be displayed. On the other hand, since it increases the image data capacity, the photographing angles must be selected in consideration of the transmission capacity of the computer network or server or the display capacity of the information device of each customer.

Since the rack 28 is present, the lower image of the object 11 cannot be photographed. To photograph the perfect 360° outer image of the object 11, a 180° image of the upper side of the object 11 is photographed first. Then, the object 11 is inverted to photograph a 180° image of the lower side of the object 11.

An example of such an object photographing apparatus is Magellan (trade name) available from Kaidan in U.S.A. An example of an apparatus which rotates an object by a motor is AutoQTVR (trade name) available from TEXNE Corporation. Not an apparatus exclusively used to photograph a 3D image but a so-called robot apparatus used in a factory or the like may be applied. A peripheral image of an object can also be photographed by attaching a camera to the distal end of the arm of the robot apparatus and setting the camera position and direction by personal computer control.

### (Second Embodiment)

As a characteristic feature of the second embodiment of the present invention, the 3D image photographing means used in the first embodiment means is applied to a digital camera system. FIG. 11 is a view showing the schematic arrangement of the second embodiment. When a digital camera is used, the digitizing apparatus shown in FIG. 1 in the first embodiment can be omitted. In addition, works associated with the operation of the digitizing apparatus can be omitted. Hence, more quick and efficient operation can be achieved as a very large effect.

Referring to FIG. 11, a digital camera system 50 includes a digital camera and digital transmitting apparatus. In a digital camera to which a digital transmitting function is attached, a standalone digital camera is used. If a communication adapter or portable telephone is connected to a digital camera for transmission, the digital camera system 50 means an integral apparatus including these devices.

When a digital camera is used, the digital camera can be set to exposure, shutter speed, illumination condition, and zoom amount suitable for 3D image photographing by using an electronic camera control function. For example, in a digital camera system Camedia C-840L (trademark) as a product available from OLYMPUS OPTICAL CO., LTD., a specific recording medium on which software that supports 3D photographing can be applied to the digital camera such that panoramic photographing can easily be done even by photographing with a camera in hand. Then, a panoramic mode is set in which an auxiliary image for supporting photographing is displayed on the monitor of the digital camera system. When data management data such as the date/time, title, number and the like or photographing data such as the exposure, shutter speed, illumination condition, and zoom amount are attached to the photographing image at the time of photographing at the image photographing site, image processing at the 3D image data production site can be efficiently performed, and any error in data handling can be prevented. A more effective application can be added.

### (Third Embodiment)

As a characteristic feature of the third embodiment of the present invention, in the digital camera system used in the second embodiment, the digital camera is set to a specific photographing condition.

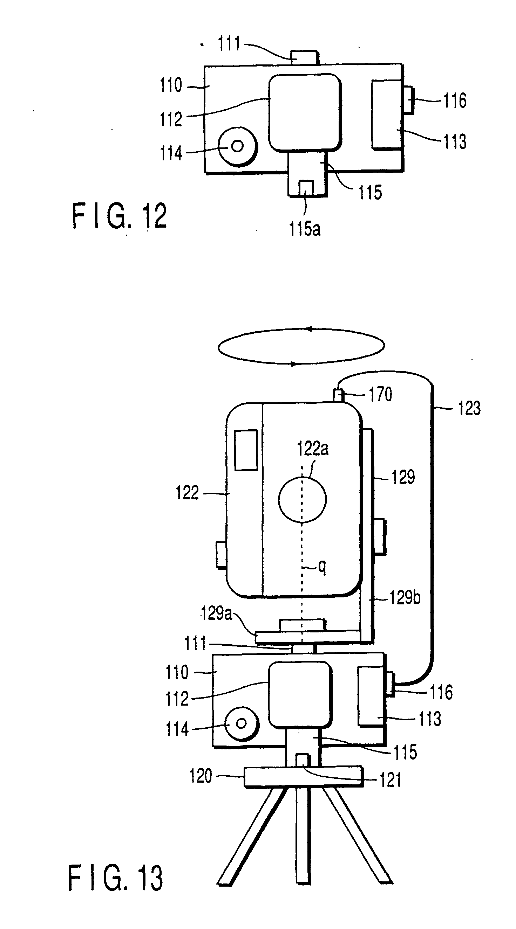

As an example of the photographing condition of a digital camera in 3D image photographing, the present applicant has proposed "Automatic Panhead Apparatus, Support Structure Thereof, and Photographing System" in Japanese Patent Application No. 10-168654. In the third embodiment, an easy and quick panoramic image or object image photographing method is provided. FIG. 12 is a view showing the schematic arrangement of an automatic panhead apparatus according to the third embodiment.

As shown in FIG. 12, an automatic panhead apparatus 110 has at least a motor 112, camera control circuit 113, and dry cell 114. A fixing member 111 fixes a camera or turntable to the case of the automatic panhead apparatus 110, as will be described later. An output shaft 115 capable of freely rotating is arranged on the motor 112 so as to project from the case. An internal thread 115a is formed at the distal end of the output shaft 115. With this structure, when a heavy stationary object and the automatic panhead apparatus 110 are connected by the fixing member 111, and the motor 112 is rotated, the output shaft 115 freely rotates. Reference numeral 116 denotes a connector of the camera control circuit 113.

On the other hand, when an external thread is formed on a heavy stationary object and fitted in the internal thread of the output shaft 115 of the motor 112 to connect the heavy fixed thing and automatic panhead apparatus 110, the automatic panhead apparatus 110 rotates by itself about the output shaft 115. When such two kinds of rotation schemes are used, two easy and quick photographing methods for a panoramic image and object image can be provided by a single compact and portable automatic panhead apparatus.

FIG. 13 is a view for explaining an embodiment in which the automatic panhead apparatus in Japanese Patent Application No. 10-168654 described above is applied to panoramic image photographing. As a digital camera 122, for example, a digital camera Camedia C-840L (trade name) as a product available from OLYMPUS OPTICAL CO., LTD. is used. An automatic panhead apparatus 110 involves a motor 112, camera control circuit 113, and dry cell 114. An L-shaped camera adapter 129 is attached and fixed to the automatic panhead apparatus 110. This camera adapter 129 has an L-shaped short-side portion 129a attached to the fixing member 111. The digital camera 122 is attached and fixed to a long-side portion 129b.

The digital camera 122 is vertically attached. In this case, the central position of a lens system 122a, i.e., the CCD element of the digital camera 122 is positioned to be on the same axis q as the output shaft 115 of the motor 112 in the automatic panhead apparatus 110.

The connector 116 of the camera control circuit 113 and a data input terminal 170 of the digital camera 122 are connected by a cable 123. In this way, the automatic panhead apparatus 110 that carries the digital camera 122 is attached on a camera tripod 120 by the internal thread 115a formed in the output shaft 115 of the motor 112 so as to fitted in an external thread 121 of the camera tripod 120.

When the start switch (not shown) of the automatic panhead apparatus is turned on, the camera control circuit 113 of the automatic panhead apparatus 110 sends a photographing signal to the digital camera 122 to photograph an image and then drives the motor 112 to perform step rotation at a predetermined angle. After this operation is repeated to divisionally photograph a 360° image, the automatic panhead apparatus 110 automatically stops. The camera control circuit 113 and motor 112 of the automatic panhead apparatus 110 are driven by using the dry cell 114 as a power supply.

Panoramic image data photographed by the digital camera in the above way is already digital data. It is quickly transmitted to the 3D image data production site through a transmitting/receiving apparatus and converted into 3D image data, as described above.

When the automatic panhead apparatus is brought to the image photographing site together with the digital camera, the photographer can automatically photograph a 360° panoramic image by setting only the photographing position and pressing the start button. For this reason, no technical knowledge and experience are required. Even a person in charge of clerical job or sales can sufficiently cope with the processing. In addition, since the dry cell is used as a power supply, the location of photographing is not limited. Photographing can be performed even at the summit of a high mountain or a real estate under construction where a power supply is hard to obtain.

The photographing system using the digital camera in the "Automatic Panhead Apparatus, Support Structure Thereof, and Photographing System" in Japanese Patent Application No. 10-168654 described above can be used not only as a panoramic image photographing apparatus but also as an object photographing apparatus using the same apparatus.

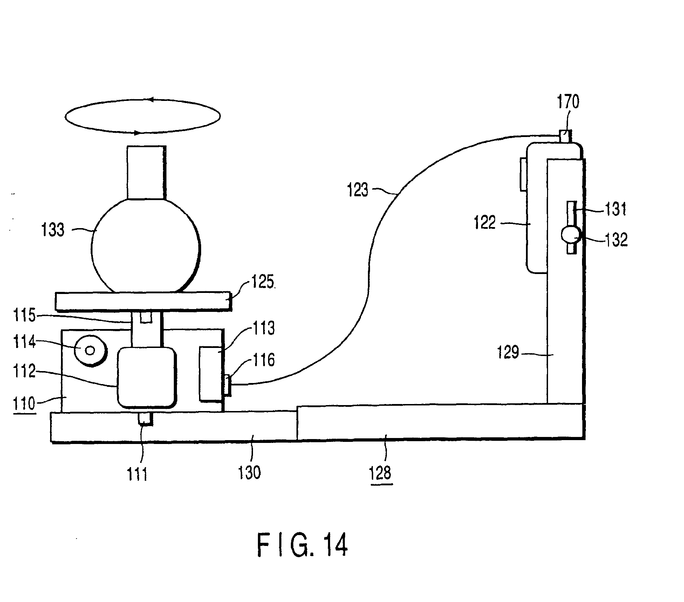

FIG. 14 is a view for explaining an embodiment in which the automatic panhead apparatus in Japanese Patent Application No. 10-168654 described above is applied to object image photographing.

In this case as well, as a digital camera 122, for example, a digital camera Camedia C-840L (trade name) as a product available from OLYMPUS OPTICAL CO., LTD. is used.

An automatic panhead apparatus 110 is the same as in FIG. 13, though it is vertically inverted and used in object photographing. In addition, a support table 128 serving as a panhead/camera support member and a turntable 125 for carrying an object are prepared together with the automatic panhead apparatus 110. A camera adapter 129 standing on the support table 128 is prepared on the support table 128. The support table 128 has a nested slide structure and has a slidable movable arm 130.

When the distance between the digital camera 122 and an object 133 is adjusted by causing the movable arm 130 to slide, the image of the object 133 can be adjusted to an appropriate size. A slide hole 131 is vertically formed in the camera adapter 129. An attachment screw 132 fitted in the internal thread of the digital camera 122 is attached to the slide hole 131 so as to freely move in the slide hole 131. Hence, the height of the digital camera 122 can be adjusted such that the object 133 is located at the center of the frame of the digital camera 122. A connector 116 of an object 133 and the data input terminal of the digital camera 122 are connected by a cable 123.

In this way, the automatic panhead apparatus 110 is fixed on the support table 128 by a fixing member 111. An output shaft 115 of a motor 112 is fitted in and connected to the turntable 125. The object 133 to be photographed is carried on the turntable 125. Object image data is generated using image data obtained by divisionally photographing the 360° outer image of the three-dimensional object 133.

When the start switch (not shown) of the automatic panhead apparatus 110 is turned on, the camera control circuit 113 of the automatic panhead apparatus 110 sends a photographing signal to the digital camera 122 to photograph an image of the object 133, then drives the motor 112 to perform step rotation at a predetermined angle set by dividing 360°, and stops the motor 112. A photographing signal is sent to the digital camera 122 again to photograph an image of the object 133, and then, the motor 112 is driven to perform step rotation at a predetermined angle set by dividing 360°. After this operation is repeated to divisionally photograph the 360° outer image of the object 133, the automatic panhead apparatus 110 automatically stops.

The above camera control circuit 113 and motor 112 of the automatic panhead apparatus 110 described above are driven by using the dry cell 114 as a power supply.

Object image data photographed by the digital camera 122 in the above way is already digital data. It is quickly transmitted to the 3D image data production site through a transmitting/receiving apparatus and converted into 3D image data, as described above.

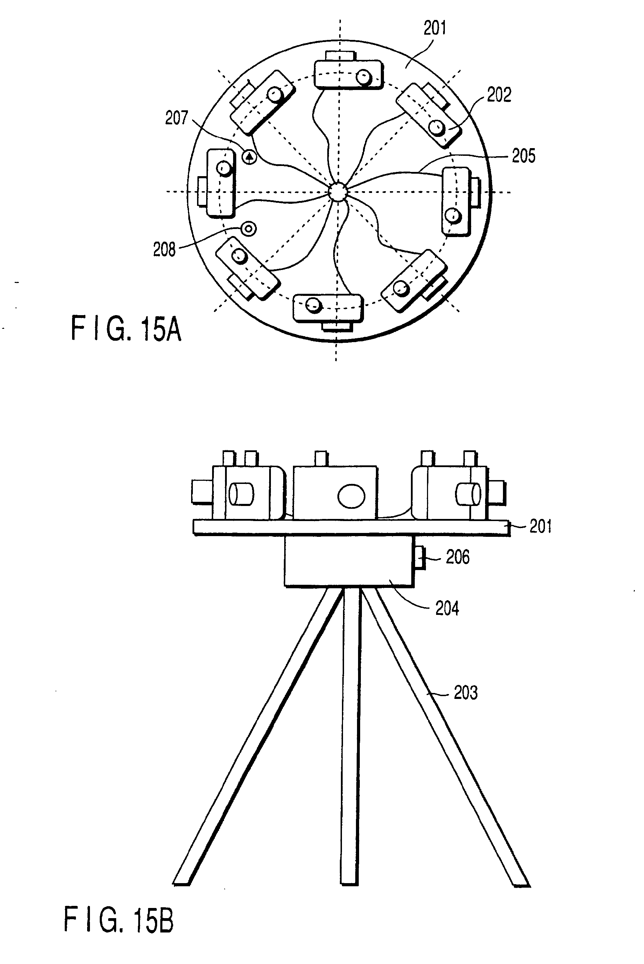

FIGS. 15A and 15B are views for explaining another embodiment of panoramic image photographing of the third embodiment of the present invention.

The 3D image photographing means described with reference to FIGS. 13 and 14 has a characteristic feature that the system is simple and inexpensive because one digital camera is used. However, since sequential photographing is done at a time interval using one digital camera, the photographing time is long. In addition, if the object is an object that moves during the photographing time, abnormal 3D image data may be obtained in converting into 3D image data, or 3D image data generation may be impossible in some cases. This includes, for example, a case wherein in panoramic photographing, an image included in a person or car moving on a road, branches of a tree or flowers in a flower bed, which are trembling in the breeze, waves washing the shore, or clouds drifting in the wind is included in an object or a case in object photographing, an animal or person in motion, or a flame or smoke is to be photographed. In such a case, a multi-camera system using a plurality of digital cameras can suitably be used.

FIGS. 15A and 15B show an arrangement in which panoramic photographing is executed by a multi-camera system using eight commercially available digital cameras. FIG. 15A is a plan view, and FIG. 15B is a front view. As shown in FIG. 15A, eight digital cameras 202 are radially arranged on a circular base 201 at an angular interval of 45° such that the optical axis of the lens of each camera is directed to the center of the circle and the central positions of the photographing elements of the cameras are arranged on the same circumference. As shown in FIG. 15B, the circular base 201 is mounted on a tripod 203. A magnet 207 for defining the directions of the cameras, and a level 208 for defining a horizontal line are attached.

A multi-camera control apparatus 204 is arranged under the circular base 201. The multi-camera control apparatus 204 controls the plurality of cameras to optimum photographing conditions for 3D image photographing such that the shutters of the plurality of cameras are simultaneously operated, the exposure amounts, shutter speeds, or focus distances, or for zoom lenses, the zoom amounts are equalized. The multi-camera control apparatus 204 and digital cameras 202 are connected by connection cords 205 whereby control signals are input or output between each digital camera 202 and the multi-camera control apparatus 204. Generally, a commercially available digital camera has a connector terminal for externally controlling the camera. The commercially available digital camera can be used by using the connector terminal. When a switch 206 of the multi-camera control apparatus 204 is turned on, the shutters of the eight digital cameras simultaneously operate to photograph a 360° peripheral image at the same moment.

The above multi-camera system is installed at an image photographing site 10 in FIG. 11 to execute photographing, and the image data is transmitted to a 3D image data production site 20 and converted into panoramic image data.

By using such a multi-camera system, in panoramic photographing on a street where pedestrians and driving cars are present, even when panoramic photographing is to be executed for, e.g., a building facing a road or a tourist attraction crowded with tourists is to be photographed, a panoramic image that is good for appreciation can easily be photographed if there is a moment convenient for photographing. If panoramic photographing is executed by manually rotating a camera on the panhead of a tripod or using the automatic panhead apparatus shown in FIG. 13, photographing must wait until the traffic breaks or the traffic must be controlled. In addition, it is almost impossible to photograph a panoramic image including a natural phenomenon with a motion such as a shore which is washed with waves.

The multi-camera control apparatus 204 is arranged near the digital cameras 202. In actual photographing, the multi-camera control apparatus 204 must be outside the frame. Hence, the multi-camera control apparatus 204 is arranged under or behind the digital cameras 202. To prevent the photographer from entering the frame, the switch 206 must be arranged under the digital cameras 202 such that the photographer crouching outside the view angle turns on the switch 206. Alternatively, the switch may be located at a separate position where the photographer does not enter the frame by using an extension cord or as a wireless switch using infrared or radio wave. The object may be illuminated by attaching an illumination apparatus to the circular base 201.

The multi-camera control apparatus 204 may incorporate an image data storage device to store a plurality of image data photographed or incorporate a communication device.

The multi-camera control apparatus 204 may have a time counting function to make interval photographing at a predetermined time. Such interval photographing is effectively used to record a change in environment such as weather, a change in traffic amount of persons or cars, or an operation progress at a construction site.

A radio data communication device may be attached to the multi-camera control apparatus 204 to input a 3D image at a remote site.

The plurality of digital cameras are radially arranged at an equal angular interval such that the total view angle of the lenses becomes 360° or more. Since north, south, east and west are usually used, the angle setting preferably includes angles at a 90° interval.

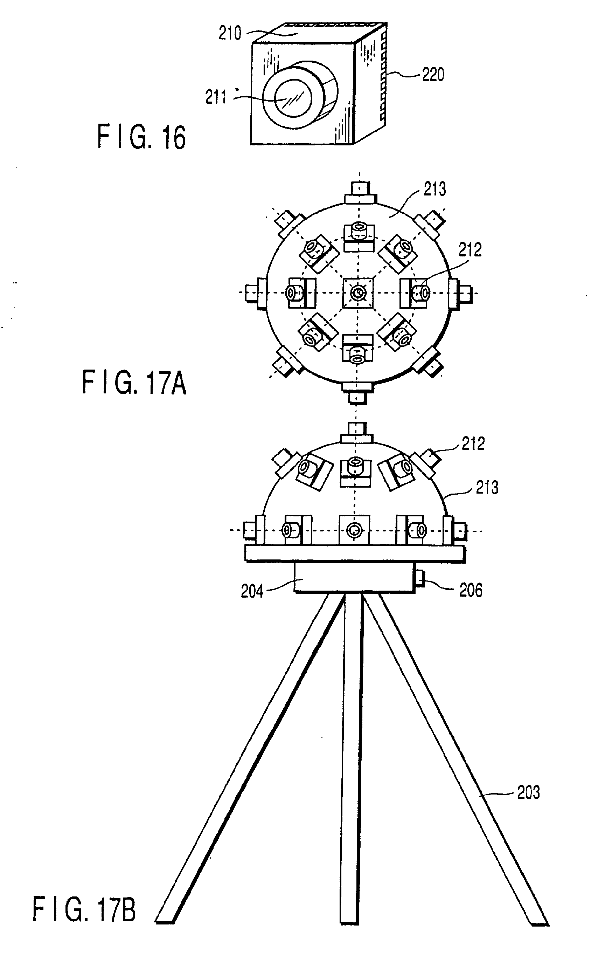

FIGS. 17A and 17B are views for explaining still another embodiment of panoramic image photographing in the third embodiment of the present invention.

In the embodiment shown in FIGS. 15A and 15B, commercially available digital cameras are used. In this case, the digital camera system becomes bulky. In addition, in the layout shown in FIGS. 15A and 15B, since the digital cameras are laid out in a columnar shape, an image immediately above the digital camera system cannot be obtained.

FIGS. 17A and 17B show the arrangement of digital cameras that solve the above problems. In this embodiment, 17 digital cameras (photographing modules 212) are arranged in a doughnut shape at a predetermined angular interval on a hemispherical surface (spherical base) 213 when viewed from the zenith. Each of the used digital cameras is a very small digital camera in a form of a photographing module integrated with a lens to be incorporated in a device.

FIG. 16 is a perspective view showing the outer appearance of the photographing module 212. These very small digital cameras generally use a so-called CMOS (Complementary Metal Oxide Semiconductor) sensor as a photographing element. In FIG. 16, a small lens 211 is attached onto a CMOS chip 210 having a CMOS sensor and peripheral circuits. A number of electrode pins 220 for power supply, control signals, and image data output are exposed around the CMOS chip 210. The photographing module 212 is connected onto a circuit board by soldering and used as an image input device.

As such a photographing module 212, for example, SC1000 series are available from OLYMPUS OPTICAL CO., LTD. Model SC1020 has 330,000 pixels, and its bottom surface has an outer size of about 15 mm square. For this reason, it can be laid out even on a hemisphere having a radius of about 20 cm.

Referring to FIGS. 17A and 17B, each photographing module 212 is connected to a connection board (not shown) on the spherical base 213 and fixed. The spherical base 213 that carries the photographing modules 212 is attached onto a tripod 203. A multi-camera control apparatus 204 is attached under the spherical base 213. When a switch 206 is turned on, the shutters of the 17 photographing modules 212 simultaneously operate to photograph a 360° peripheral image at the same moment. Image data of each photographing module 212 is recorded in a recording device incorporated in the multi-camera control apparatus 204. The multi-camera control apparatus 204 also incorporates a battery for the photographing modules. Since the power consumption of a CMOS sensor is very low, even such a number of photographing modules can be driven by a small battery.

The multi-camera system shown in FIGS. 17A and 17B is installed in an image photographing site 10 shown in FIG. 11 to photograph, and the image data is transmitted to a 3D image data production site 20 and converted into panoramic image data.

The photographing modules 212 may be arranged at the positions of vertices of a regular polyhedron. In this case, the photographing modules 212 have a predetermined distance therebetween. Usable regular polyhedra are a regular dodecahedron and regular icosahedron because the number of vertices is preferably large to some extent. In a regular dodecahedron, since one regular triangle is used as a bottom surface, nine photographing modules are arranged at the positions of the remaining nine vertices. In a regular icosahedron, since one regular pentagon is used as a bottom surface, 15 photographing modules are arranged at the positions of the remaining 15 vertices.

As described above, according to the multi-camera system having the photographing modules 212 arranged on the spherical base 213, a moving object can be photographed, and additionally, even a point immediately above the zenith of the sphere can be photographed. The multi-camera system can be used for various application purposes. For example, the whole dome of the sky may be sequentially photographed to record a change in weather. The inner surface of a dome-shaped building such as a church may be photographed. The multi-camera system may be hung from a crane, airship, or hot-air balloon and used to photograph the 3D image of a building or geographical feature viewed from the sky. Alternatively, a waterproof multi-camera system may be hung from above into the sea and used to photograph or record the ecological distribution of fishes in the sea.

In addition, the multi-camera system may be mounted in a car to photograph while driving on a road, and a 3D image by the image data is published on a car navigation system. It is also effective to publish a 3D panoramic image on a road and map information to correspond with each other. Since vibration is generated during driving on the road, the digital camera system capable of instantaneously photographing a 360° panoramic image is very effective. It is more effective when a so-called GPS system that obtains position data by receiving a signal from an artificial satellite is installed together with the multi-camera control apparatus, and image data and corresponding position data are recorded.

In this embodiment, the cameras are arranged on a hemispherical surface. However, the cameras may be arranged on a spherical surface.

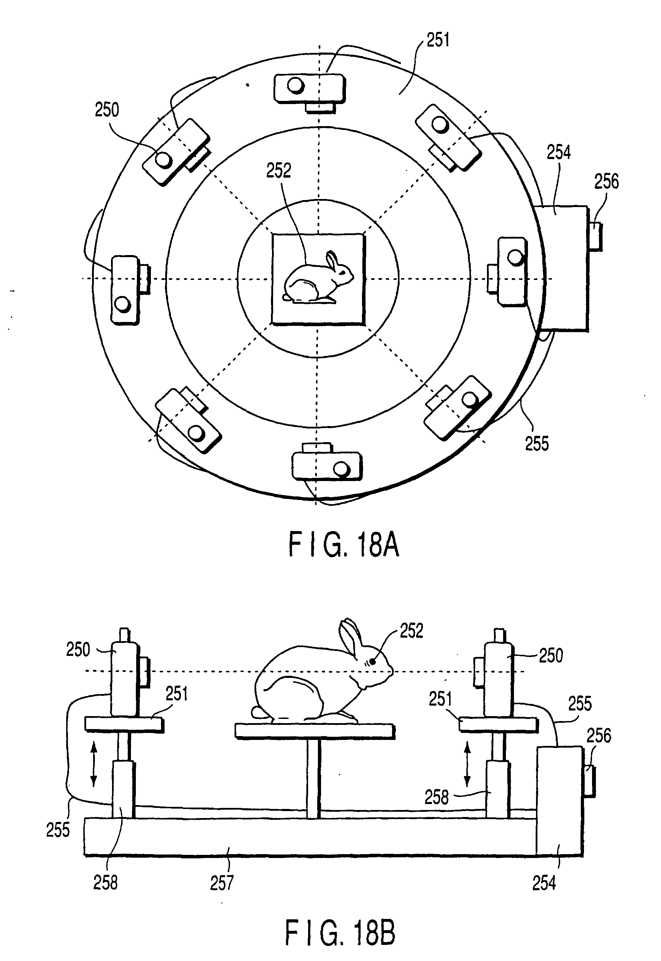

FIGS. 18A and 18B are views for explaining an embodiment of object image photographing in the third embodiment of the present invention. In this embodiment, the object image of an object is photographed using a multi-camera system using a plurality of digital cameras.

FIGS. 18A and 18B show an arrangement in which an object image is photographed using eight commercially available digital cameras. FIG. 18A is a plan view, and FIG. 18B is a front view. As shown in FIG. 18A, eight digital cameras 250 are radially arranged on a doughnut-shaped camera rack 251 at an angular interval of 45° such that the optical axis of the lens of each camera is directed to the center of the circle and the central positions of the photographing elements of the cameras are arranged on the same circumference.

As shown in FIG. 18B, the digital camera 250 is mounted on a base 257 through an adjuster 258. The height of the camera rack 251 is adjusted by the adjuster 258 such that each digital camera 250 is horizontally set while directing the optical axis center of its lens to almost the center of an object 252, and the object 252 located at the center of the frame is photographed. A multi-camera control apparatus 254 is arranged near the base 257.

The multi-camera control apparatus 254 controls the plurality of cameras to optimum photographing conditions for 3D image photographing such that the shutters of the plurality of cameras are simultaneously operated, the exposure amounts, shutter speeds, or focus distances, or for zoom lenses, the zoom amounts are equalized.

The multi-camera control apparatus 254 and digital cameras 250 are connected by connection cords 255 whereby control signals are input or output between each digital camera 250 and the multi-camera control apparatus 254. Generally, a commercially available digital camera has a connector terminal for externally controlling the camera. The commercially available digital camera can be used by using the connector terminal. When a switch 256 of the multi-camera control apparatus 254 is turned on, the shutters of the eight digital cameras simultaneously operate to photograph the 360° image of the object at the same moment.

In this multi-camera system, a columnar uniform screen of white or the like may be arranged behind the object. The multi-camera system is installed at an image photographing site 10 in FIG. 11 to photograph, and the image data is transmitted to a 3D image data production site 20 and converted into object image data.

By using such a multi-camera system, in photographing an object such as a person or animal that can hardly stay still, an object image that is good for appreciation can easily be photographed if there is a moment convenient for photographing. In addition, an object having an unstable shape may be temporarily fixed and photographed at the moment when the fixing is canceled. Alternatively, photographing may be done in synchronism with an apparatus for breaking an object such as a glass product. When the shutter of each digital camera is operated in synchronism with an electronic flash device at the moment of break to photograph the 360° image of the object at the time of break, the object image can be used to scientifically analyze the phenomenon. Alternatively, the object image of a flame or cigarette smoke can be photographed.

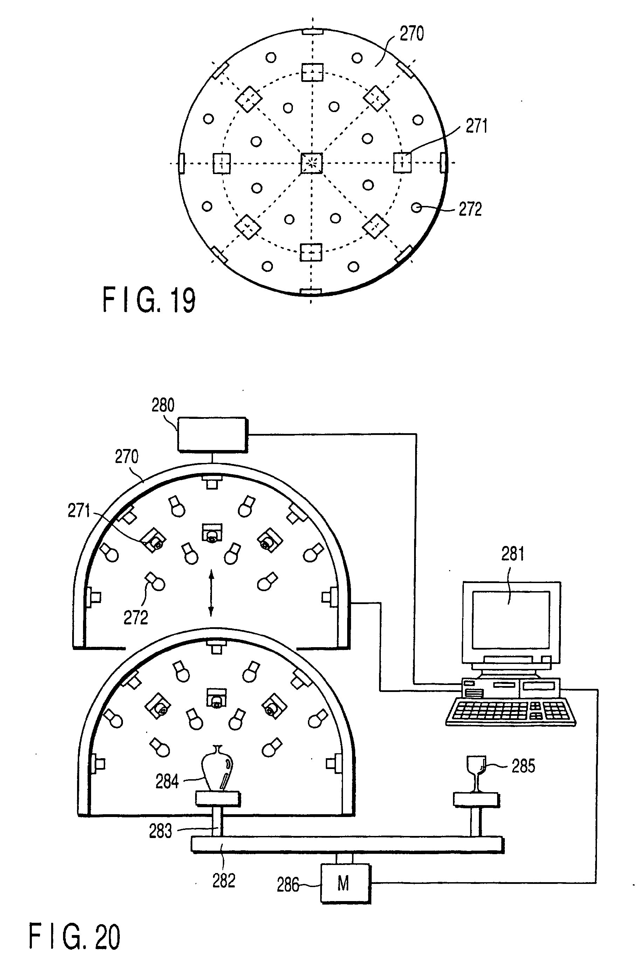

FIG. 19 is a view for explaining another embodiment of the object image apparatus in the third embodiment of the present invention.

In the embodiment shown in FIGS. 18A and 18B, commercially available digital cameras are used. In this case, the digital camera system becomes bulky. In addition, in the layout shown in FIGS. 18A and 18B, since the digital cameras are laid out in a columnar shape, an image immediately above the object cannot be obtained.

It is the digital camera system shown in FIG. 19 that solves the above problems. FIG. 19 is a view schematically showing the planar layout of the digital camera system viewed from the upper side, in which rectangles indicate photographing modules 271, and circles indicate the positions of illumination lamps 272. In this embodiment, 17 digital cameras are arranged in a doughnut shape at a predetermined angular interval on a hemispherical surface when viewed from the zenith. Each of the used digital cameras is a digital camera having a photographing module shape integrated with a lens to be incorporated in a device, as in FIG. 16.

Referring to FIG. 19, each photographing module 271 is attached to the inner wall of an almost hemispherical camera dome 270, and connected to a circuit board (not shown) on the inner surface of the camera dome 270 and fixed. An object to be photographed is placed at the central position of the camera dome 270, and an object image is photographed. Since external light is shielded, the illumination lamps 272 for uniformly illuminating the object are arranged between the photographing module 271 on the inner wall of the camera dome 270.

FIG. 20 is a view for explaining an object image photographing system using the above-described digital camera system and shows the schematic arrangement of an apparatus section. This system is used to efficiently photograph object images of a number of subjects to be photographed. The camera dome 270 having the photographing modules 271 is attached to an electrically-driven moving device 280 and vertically driven. A plurality of racks 283 on which subjects to be photographed are placed are attached onto a rotary table 282 that is rotated by a motor 286. The moving device 280, photographing modules 271, illumination lamps 272, motor 286, and the like, which are electrically controlled in this photographing, are connected to a control workstation 281 through connection cables and controlled.

The function of the above-described arrangement will be described below. First, the camera dome 270 is moved upward by the electrically-driven moving device 280. Next, the rotary table 282 is rotated by a motor 286 to move and stop an object 284 immediately under the center of the camera dome 270. The camera dome 270 is moved downward and stopped at a predetermined position by the electrically-driven moving device 280. The illumination lamps 272 are turned on, and the image data of each photographing module is sent to the control workstation 281.

The control workstation 281 controls the brightness of the illumination lamps 272 and exposure of each photographing module 271 such that an appropriate photographing quality of the object 284 can be obtained. After appropriate photographing conditions are set, the control workstation 281 simultaneously operates the shutters of the 17 photographing modules 271 to photograph a 360° image at the same moment. The image data of each photographing module 271 is recorded in a recording device (not shown) attached to the photographing module 271.

While the image data is recorded, the camera dome 270 moves upward, the rotary table 282 is rotated by the motor 286 to move an object 285 immediately under the center of the camera dome 270, and similar photographing operation is repeated. Accordingly, a number of subjects can be efficiently photographed as 3D images.

These processes may be automatically executed. However, since the operator may have to change the zoom amount of each camera or set the exposure amount or illumination amount while seeing the monitor of the control workstation 281 so as to appropriately set the size of the image in accordance with the object, a system including partial manual operation or visual decision may be used.

As the arrangement of the digital cameras, they may be arranged at the positions of the vertices of a regular polyhedron. For an object image, images from four directions, i.e., front, rear, left, and right sides are important. Hence, the digital cameras are mainly arranged in these four directions. For this reason, the digital cameras are preferably arranged concentrically, as shown in FIG. 19.

In the above-described multi-camera system for object photographing, an excess image of, e.g., a digital camera on the opposite side is photographed together with the object. These images may be manually removed at the time of image processing at the 3D image data production site. However, it is efficient to automatically execute image processing such that photographing is executed without any subject, and this basic image data is subtracted from image data containing the object. To prevent the digital camera body itself from entering the frame as much as possible, a so-called pinhole camera may be used.

In this embodiment, the cameras are hemispherically arranged. However, the cameras may be spherically arranged to photograph the whole peripheral image of the object.

Various effective photographing conditions, photographing apparatuses, and photographing methods have been described above in relation to 3D photographing by the digital camera system. The present invention is not limited to the above-described combinations. The digital camera system can be effectively used as a standalone device or by an appropriate combination in accordance with the 3D photographing situation.

### (Fourth Embodiment)

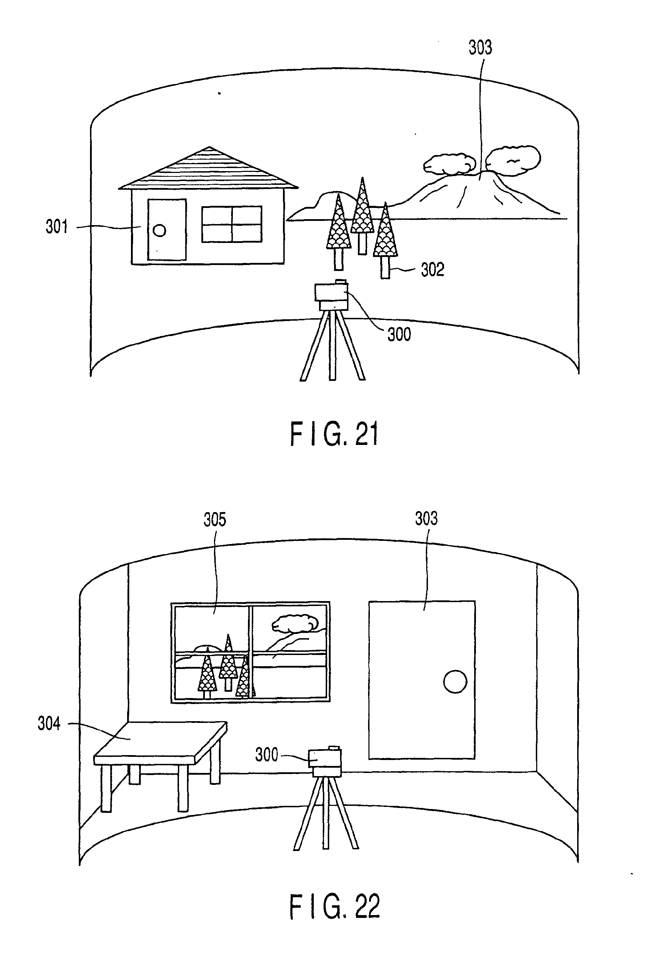

FIGS. 21 and 22 are views for explaining the outline of the fourth embodiment of the present invention.

Referring to FIG. 21, a client is executing panoramic image photographing about the environment of a real estate 301 using a digital camera system 300 at the image photographing site. Panoramic photographing is executed such that the real estate 301, a short-range view 302, and a distant view 303 are contained. In addition, as shown in FIG. 22, panoramic image photographing is executed in the real estate 301 using the digital camera system 300.

As in FIG. 2, after photographing, the image data output from the digital camera is immediately transmitted to a 3D image data production site using a transmitting apparatus (not shown) by a communication method using a public line or wireless communication using a PHS or the like. The 3D image data production site receives the image data and produces 3D image data using hardware such as a personal computer or workstation with an advanced function and 3D image data generation software of its own.

The 3D image data is stored in a server 31 shown in FIG. 11, which is connected to the Internet. The 3D image data stored in the server 31 can be seen on a display apparatus having observation software called Viewer software. A customer who is connected to the Internet can see the environmental and indoor panoramic images of the real estate on a monitor using a personal computer, a game machine with a communication function, a portable telephone with a monitor, or a portable information terminal called a PDA (Personal Digital Assistant) as if he were at the spot.

In this case, the digital camera system for panoramic image photographing shown in FIG. 13, 15A, 15B, 17A, or 17B is preferably used. Even a salesman or part-time worker who has no sufficient technical knowledge can easily automatically photograph a 360° image in a short time only by pressing a switch. Hence, for the client, the production cost can be reduced, and the sales efficiency can be increased.

On the other hand, it is also very useful for the customer because the real estate can be quickly published on the Internet almost in real time by this method though, conventionally, it takes a long time to photograph a real estate and publish its 3D image on the Internet, and therefore, a contract may be already made by a third party for a real estate with which the customer is pleased.

In addition to the above-described buildings, even a real estate with a wide area such as a golf course or amusement park can also be an object. In this case, the digital camera system is moved to and installed at a particularly attracting point in the area to photograph a panoramic image. Three-dimensional panoramic image data is generated from the obtained image data and published on a homepage of the Internet. In this case, publishing simple image data is effective as an explanation of the site. However, it is more effective when a map and layout are published in linkage with the image data because the location and landscape can be seen in correspondence with each other.

In addition to the 3D image of the panoramic image described above, a real estate can also be applied as the 3D image of the object image of a large structure such as a building viewed from the 360° direction. In this case, the object photographing method as described with reference to FIG. 14 is impossible. Hence, for example, a GPS adapter capable of detecting the position of the current latitude/longitude by receiving a signal from an artificial satellite or a position confirming system which receives a radio wave from a specific radio wave transmitting apparatus and outputs position data to calculate the current camera position is attached to the digital camera system at the image photographing site. The 360° image of the object is photographed, and the image data is transmitted to the 3D image data production site in correspondence with the position data.

At this time, a sensor such as a magnetic sensor for detecting the photographing direction or photographing direction of the camera as well as the camera position may be added to the camera, and such camera direction data may also be added to the position data. At the 3D image data production site, image data can be synthesized into one 3D image using image processing software while referring to the acquired position data. When this method is used, not only a structure but also an entire city or a geographical feature such as a mountain can also be converted into the object image of a 3D image.

### (Fifth Embodiment)

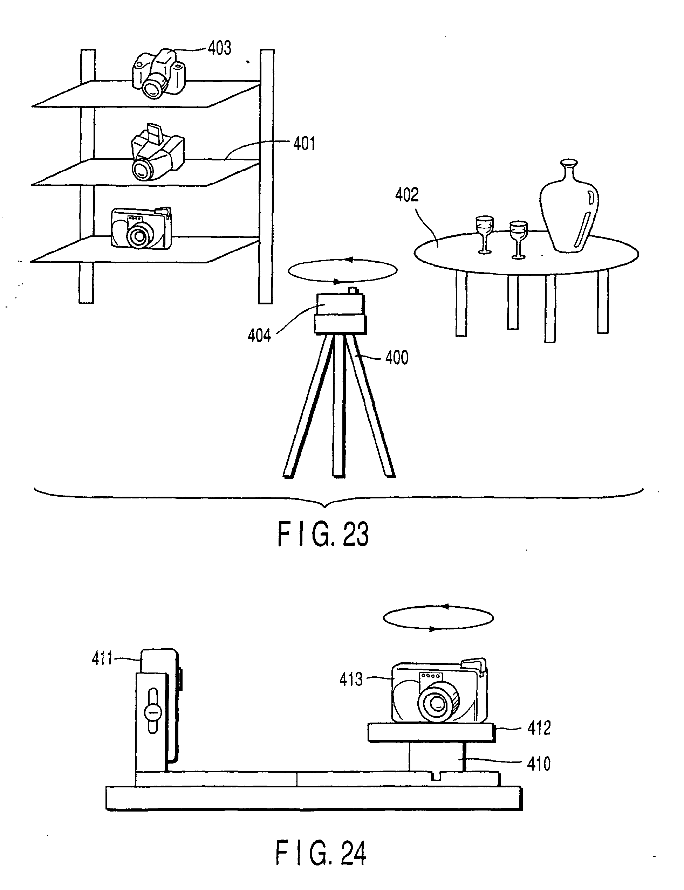

FIGS. 23 and 24 are views for explaining the outline of the fifth embodiment of the present invention. As a characteristic feature of the fifth embodiment, the image photographing site is a camera shop. Referring to FIG. 23, pieces of merchandise 403 are displayed on a display rack 401. There is also an interior decoration 402 in the shop. A digital camera system 400 is a digital camera system that uses an automatic panhead apparatus described with reference to FIG. 13 for panoramic photographing. A digital camera 404 of the digital camera system 400 is rotated to divisionally photograph the 360° image in the shop.

Alternatively, as shown in FIG. 24, using an automatic panhead apparatus 410 described with reference to FIG. 14 and a digital camera 411 similar to those described with reference to FIG. 14, merchandise 413 to be sold is placed on a turntable 412, and the 360° image of the merchandise 413 is photographed as an object image.

The panoramic or object image data photographed by the digital camera in the above way is immediately transmitted to a 3D image data production site using a transmitting apparatus (not shown) by a communication method using a public line or wireless communication using a PHS or the like.

The 3D image data production site receives the image data and produces 3D image data using hardware such as a personal computer or workstation with an advanced function and 3D image data generation software of its own. The 3D image data is stored in a server 31 shown in FIG. 11, which is connected to the Internet, and published as the homepage of the client. A customer who is connected to the Internet can see the panoramic image in the shop on a monitor using a personal computer, a game machine with a communication function, a portable telephone with a monitor, or a portable information terminal called a PDA (Personal Digital Assistant). He can see the merchandise displayed in the shop and grasp the atmosphere in the shop as if he were in the shop.

In addition, using the object image by the 3D image data of the merchandise, the merchandise to be sold can be examined in detail as if he were seeing it at hand. Since a panoramic image and object image can easily be photographed by the digital camera system that uses a commercially available digital camera, a client can photograph even in a small shop which has a small scale and no suitable photographing space, such as a private concern or convenience store. For this reason, even immediately before or during open, bargains or loss leaders can be published on the Internet in real time in accordance with the situation of sales or inventory.

On the other hand, the digital camera system shown in FIGS. 14, 18A and 18B can also be used in a large-scale store such as a supermarket or department store, as described above. However, since the large-scale store handles various kinds of merchandise, it is more effective to automatically photograph merchandise to be sold using an automatic photographing apparatus as shown in FIG. 20. In this case, a place such as a merchandize purchase department or storage department such as a warehouse where no image photographing specialist is present is used as an image photographing site. Even a nonspecialist of such a department can easily photograph the 3D image of an object.

In this case, at the image photographing site, not only simple image photographing may be done, but also management data such as the delivery date, product name, maker name, distributor name, time limit for use, cost, selling price, and sending destination may be added to the photographed image data and sent to the 3D image data production site such that the 3D image and these management data are published on the Internet in correspondence with each other. Such a computer network is called an intranet and used as a system that can be accessed by not general consumers but only permitted persons in a company. That is, the customers 41 to 44 in FIG. 1 permitted persons in charge in the company or permitted by the company.

The description above has been made mainly in consideration of application to the Internet serving as a computer network. The present invention can be applied not only to the Internet but also to any other network using computers, such as a LAN (Local Area Network), satellite communication network, or a dedicated network using a dedicated line.

As the digital camera, the above description has been made in consideration of application of a so-called digital still camera dedicated to photograph a still image. However, a so-called video camera for photographing a moving image also photographs still images at a video rate (60 frames per sec), as is known. Any video camera can also be used because it can be applied to the present invention by using a still image at a given moment.

In the multi-camera system described with reference to FIGS. 15A, 15B, 17A, 17B, 18A, 18B, 19, and 20, when a plurality of video cameras are used, and a moving image is photographed by synchronizing the photographing timings of the video cameras, the 3D image data of a still image at a given moment can be generated. Sixty frames per sec can be generated for the 3D image data of the still image at that moment. Hence, when these frames are put together into one image data file, 3D moving image data can be obtained. More specifically, when an arbitrary predetermined direction is designed, and an image in the designated direction is extracted from 3D moving image data, 60 still images per sec in the designated direction can be obtained. When the still images are continuously displayed on the monitor, a moving image in the designated direction can be seen.

According to the above-described first to fifth embodiments, since an optimum image photographing means is provided to a client, and the client photographs an object using the provided optimum image photographing means, 3D image data can be quickly published on a computer network, the cost and expenses of production can be reduced, and the client's intension about production can be sufficiently reflected.

According to the present invention, a 3D image data publishing method and 3D image production system, which can quickly publish 3D image data on a computer network, reduce the cost and expenses of production, and sufficiently reflect the client's intension about production can be provided.

### Industrial Applicability

As has been described above in detail, according to the present invention, a 3D image data publishing method using a computer network comprises the steps of providing a 3D image photographing means to an image photographing site, causing the image photographing site to acquire image data by photographing an object using the provided 3D image photographing means and transmit the image data to a 3D image data production site, and causing the 3D image data production site to produce 3D image data on the basis of the received image data and publish the 3D image data on the computer network, wherein at least the image photographing site and 3D image data production site are separated. According to this arrangement, when an optimum image photographing means is provided to a client, and the client photographs an object, 3D image data can be quickly published on a computer network, the cost and expenses of production can be reduced, and the client's intension about production can be sufficiently reflected.

According to the present invention, in a 3D image production system for producing 3D image data from a plurality of photographed image data, photographing data is added to each image data.

According to the present invention, in a 3D image production system, a panoramic image photographing apparatus having a plurality of photographing modules arranged on a substantially spherical base is installed facing down to produce 3D image data viewed from the upper side.

According to the present invention, in a 3D image production system, a panoramic image photographing apparatus having a plurality of photographing modules arranged on a substantially spherical base is mounted on a driving car to photograph a peripheral image.

According to the present invention, in a 3D image production system, a plurality of digital cameras are arranged around an object, and the object is photographed by operating the shutters of the plurality of cameras in synchronism with a change of the object or an apparatus which changes the object.

According to the present invention, in a 3D image production system which has a plurality of digital cameras arranged around an object to photograph an object image, image data containing no subject is compared with image data containing the object, and images other than the object are removed.

According to the present invention, in a 3D image production system, a direction sensor is added to a camera to add photographing direction data to photographed image data.

According to the present invention, in a 3D image production system which has a plurality of digital cameras arranged around merchandise to photograph an object image, merchandise management data is added to the image data of the merchandise.

## Claims

1. A 3D image data publishing method using a computer network, comprising the steps of:
providing 3D image photographing means to an image photographing site;
causing the image photographing site to acquire image data by photographing an object using the provided 3D image photographing means and transmit the image data to a 3D image data production site; and
causing the 3D image data production site to produce 3D image data on the basis of the received image data and publish the 3D image data on the computer network,
wherein at least the image photographing site and 3D image data production site are separated.

2. A 3D image data publishing method according to claim 1, wherein providing the 3D image photographing means includes freely lending, rental, lease, or sales for pay of the 3D image photographing means, or recommending appropriate 3D image photographing means to make a client obtain the 3D image photographing means by himself.

3. A 3D image data publishing method according to claim 1, wherein the 3D image photographing means includes a camera system for photographing a panoramic image, and the 3D image data is produced on the basis of a panoramic image photographed by the camera system.

4. A 3D image data publishing method according to claim 1, wherein the 3D image photographing means includes a camera system for photographing an object image, and the 3D image data is produced on the basis of an object image photographed by the camera system.

5. A 3D image data publishing method according to claim 1, wherein the 3D image photographing means is a digital camera system.

6. A 3D image data publishing method according to claim 5, wherein the digital camera system includes a digital camera for photographing an object, and setting means for setting the digital camera to a specific photographing condition.

7. A 3D image data publishing method according to claim 5, wherein the digital camera system has an arrangement in which a plurality of digital cameras are arranged along a periphery of a circular base at a predetermined angle and predetermined interval in order to photograph a panoramic image.

8. A 3D image data publishing method according to claim 5, wherein the digital camera system has an arrangement in which a plurality of photographing modules are arranged on a substantially spherical base at a predetermined angle and predetermined interval in order to photograph a panoramic image.

9. A 3D image data publishing method according to claim 5, wherein the digital camera system has an arrangement in which a plurality of photographing modules are arranged at positions of vertices of a regular polyhedron at a predetermined angle and predetermined interval in order to photograph a panoramic image.

10. A 3D image data publishing method according to claim 8, wherein the photographing module has a CMOS sensor as a photographing element.

11. A 3D image data publishing method according to claim 9, wherein the photographing module has a CMOS sensor as a photographing element.

12. A 3D image data publishing method according to claim 5, wherein the digital camera system has an arrangement in which a plurality of digital cameras are arranged on a doughnut-shaped camera rack at a predetermined angle and predetermined interval in order to photograph an object image.

13. A 3D image data publishing method according to claim 5, wherein the digital camera system has an arrangement in which a plurality of photographing modules are arranged on an inner wall of a substantially spherical camera dome at a predetermined angle and predetermined interval in order to photograph an object image.

14. A 3D image data publishing method according to claim 1, wherein the object is a real estate.

15. A 3D image data publishing method according to claim 1, wherein the image photographing site is a merchandise shop.

16. A 3D image data publishing method according to claim 1, wherein 3D image data in an appropriate format is transmitted in correspondence with an information device which is connected to the computer network to receive and display the 3D image data.

17. A 3D image production system for producing 3D image data from a plurality of photographed image data, wherein photographing data is added to each image data.

18. A 3D image production system, wherein a panoramic image photographing apparatus having a plurality of photographing modules arranged on a substantially spherical base is installed to face down to produce 3D image data viewed from an upper side.

19. A 3D image production system, wherein a panoramic image photographing apparatus having a plurality of photographing modules arranged on a substantially spherical base is mounted on a moving car to photograph a peripheral image.

20. A 3D image production system, wherein a plurality of digital cameras are arranged around an object, and the object is photographed by operating shutters of the plurality of cameras in synchronism with a change of the object or an apparatus which changes the object.

21. A 3D image production system which has a plurality of digital cameras arranged around an object to photograph an object image, wherein image data containing no subject is compared with image data containing the object, and images other than the object are removed.

22. A 3D image production system, wherein a direction sensor is added to a camera to add photographing direction data to photographed image data.

23. A 3D image production system which has a plurality of digital cameras arranged around a piece of merchandise to photograph an object image, wherein merchandise management data is added to image data of the merchandise.
